# EUROPEAN PATENT SPECIFICATION

(11) **EP 0 755 044 B1**
(45) Date of publication and mention of the grant of the patent: **17.09.2003**
(21) Application number: 96304946.5
(22) Date of filing: 04.07.1996
(51) Int. Cl.: G09G 3/36

(54) **Device and method for driving liquid crystal display with precharge of display data lines**
Verfahren und Einrichtung zur Steuerung einer Flüssigkristallanzeige mit Vorladen von Anzeigedatenleitungen
Appareil et méthode d'attaque d'affichage à cristaux liquides avec précharge des lignes de données d'affichage

(30) Priority: 18.07.1995 JP 18138995
(43) Date of publication of application: 22.01.1997
(73) Proprietor: International Business Machines Corporation, Armonk, N.Y. 10504 (US)
(72) Inventor: Enami, Kunio, Yasu-gun, Shiga-ken (JP); Tomooka, Takatoshi, Yasu-gun, Shiga-ken (JP)
(74) Representative: Ling, Christopher John

(56) References cited:
- EP-A- 0 241 562
- EP-A- 0 678 849
- WO-A-94/10676
- DE-A- 4 315 819
- PATENT ABSTRACTS OF JAPAN vol. 95, no. 8, 29 September 1995 & JP-A-07 121139 (MATSUSHITA ELECTRIC IND. CO.), 12 May 1995,

## Description

### Field of the invention

The present invention relates to a device and method for driving a liquid crystal display, and, more particularly, to a method for driving a liquid crystal display having display cells each of which consists of a switching element connected to a data line and a gate line, a pair of electrodes oppositely disposed with a predetermined spacing, a liquid crystal disposed between the pair of electrodes and a driver for a liquid crystal display to which the driving method can be applied.

### Background art

A liquid crystal display (LCD) is conventionally known as a display for displaying characters or images such as graphics on an information processing device such as a personal computer. An active matrix driven LCD which is composed by arranging switching elements such as thin film transistors (TFT) in a matrix is particularly promising as a display replacing a CRT because it can control intensity of pixels and is also suitable for display of dynamic images with fast movement and for color images. In a TFT LCD, a number of display cells are arranged in a matrix. Each display cell comprises a pair of TFT and an electrode provided on a pair of opposed substrates, a transparent common electrode formed over the entire surface of another substrate (transparent substrate) and liquid crystal sealed between the pair of substrates. The former substrate is provided with a number of gate lines for turning on the TFTs by row, and a number of data lines for applying voltage on the liquid crystal through the TFTs which are turned on.

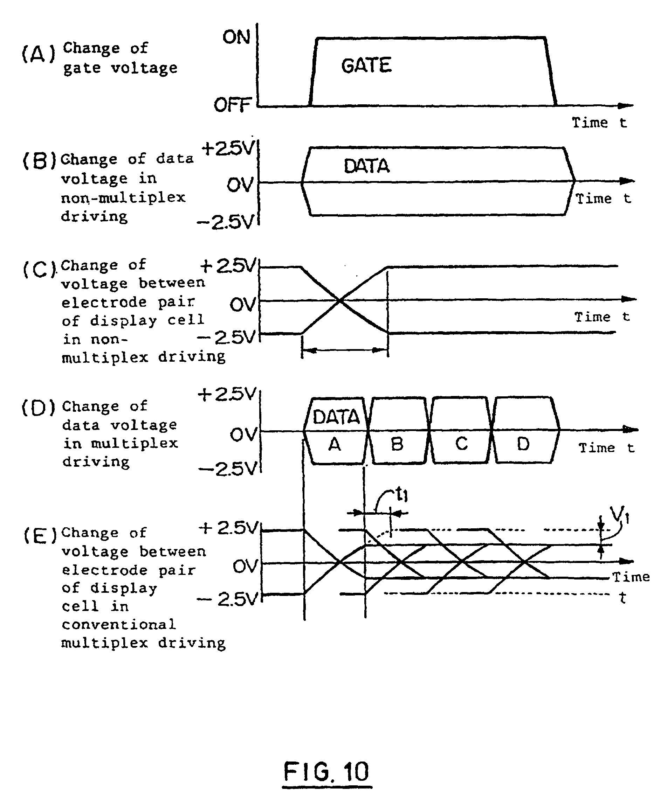

A driving device for TFT LCD applies a voltage to the gate lines for a predetermined duration as shown in Figure 10 (A) to sequentially turn on the TFT of each display cell, and applies on each data line a voltage with intensity corresponding to a gradation value to be displayed on a display cell for which the TFT is turned on (data voltage) (see Figure 10 (B)). When the TFT is turned on and a data voltage is applied to the data line, the liquid crystal of each display cell varies its light transmittance according to intensity of the voltage, and accumulates charges between the pair of electrodes. After the TFT is turned off, the accumulated charges maintain the state where the light transmittance is varied (see Figure 10 (C)). This causes an image to be displayed on the LCD. In addition, the life of liquid crystal is shortened if voltage with the same polarity continues to be applied. Thus, it is intended to extend the life of liquid crystal in such a manner that the liquid crystal is driven by reversing the polarity of data voltage, for example, every one line or one frame to reverse the data voltage applied to each display cell every time through utilization of the fact that the light transmittance of liquid crystals becomes equal even if the polarity differs as long as the absolute value of applied voltage is same.

As a driver (a part of the driving device) for driving the data line of LCD, it is common to use a driver which has driving circuits for applying data voltage to the data lines in the same number as the data lines. However, when a very large number of data lines (for example, 1,000 lines) are provided to attain an LCD with a large surface area and high definition, which is an important challenge in the development of LCD, there arises a problem that the driver becomes very expensive because a very large number of driving circuits are necessary (for example, four driver ICs having 250 output terminals (250 driving circuits) are necessary to be provided to drive 1,000 data lines). In addition, when the pitch of LCD display cells is reduced to attain high definition of the LCD, this causes to reduce the pitch of data lines as well. For example, if it is reduced to about 15 microns, it physically becomes very difficult to mount the driver ICs.

As a technique to overcome the above problems, it has been proposed to perform so-called multiplex driving wherein a driver having driving circuits of 1/n (n being an integer) in the number of data lines is provided, and a multiplexer is provided for selectively connecting the driver to any one of n sets of data line groups so that the driver and multiplexer sequentially drives n sets of data line groups. In multiplex driving, because the number of driving circuits can be less than that of data lines, it is possible to achieve a low cost driver and mounting of the driver ICs can be relatively easy even if the pitch of data lines is small.

However, in multiplex driving, if the display cycle for an image (cycles of vertical and horizontal synchronizing signals) is constant, the time interval when the data voltage is applied to each of data line group is shortened as the ratio n of the number of data lines to the number of driving circuits (called the "multiplex ratio n") becomes larger. For example, as shown in Figure 10 (D), when the data lines are divided into four data line groups of A - D, and the data voltage is sequentially applied to display cells connected to each data line group, the duration to apply the data voltage to each display cell becomes 1/4 of the case where the multiplex driving is not performed. This makes, as shown in Figure 10 (E), the duration insufficient to apply the data voltage (insufficient duration of application being represented by t₁), and the voltage between the electrodes fails to reach the predetermined value corresponding to the applied data voltage (insufficient voltage between the electrodes being represented by V₁) so that gradation provided by the light transmittance of liquid crystal of each display cell does not match the gradation to be displayed on each display cell, and thus the quality of displayed image is deteriorated.

Therefore, in conventional multiplex driving, it is common to provide a multiplex ratio of about 2 (the number of driving circuits being 1/2 of the number of data lines). This is because it is difficult to increase the multiplex ratio n in view of the reason described above.

PCT patent application WO 94/10676 discloses a multiplexed driven display in which the data lines are all precharged to a value of approximately the maximum data voltage that can be displayed. Then, each of the data line groups have the data voltage applied sequentially.

The present invention is made in view of the above facts, and is intended to obtain a device and method for driving a liquid crystal display which can display an image at high quality even if the duration to apply the data voltage is short.

### Disclosure of the invention

To attain the above object, a device for driving a liquid crystal display according to the present invention is a driving device for driving a liquid crystal display in which a number of data lines and a number of gate lines are arranged to intersect with each other, and respective display cells are positioned at the intersections of the data and gate lines, the data lines consisting of a plurality of data line groups, each display cell consisting of a switching element connected to a data line and a gate line, a pair of electrodes oppositely positioned with a predetermined spacing, and liquid crystal disposed between the pair of electrodes, the driving device comprising gate line driving means connected to a number of the gate lines, and for applying a voltage to the gate lines to turn on for a predetermined duration the switching element of the display cell connected to the gate line, data line driving means connected to a number of the data lines, and for applying a data voltage to the data lines for the predetermined duration to change the voltage between the electrode pair of the display cell connected to the gate line to which the voltage is applied by the gate line driving means to a predetermined voltage, and potential control means for controlling potential on a number of the data lines so that, before the data voltage is applied by the data line driving means, the potential on a data line in each of said data line groups is controlled such that the charge time for the data line and the pixel capacitor is reduced and that the potential on data lines in only one data line group at a time is controlled.

In the above arrangement, the data voltage is applied to the data line by the data line driving means in a state where the voltage is applied to the gate line and the switching element of respective display cells connected to the gate line is turned on. As the data voltage is applied, a current flows through the data line so that the voltage between the electrode pair of the display cell to which the data line is connected and the switching element of which is turned on is changed to a predetermined voltage. Here, the time from starting of application of data voltage to change of voltage between the electrode pair to the predetermined voltage is affected by capacitance between the electrode pair and capacitance contained in the data line. In this case, generally, the capacitance of the data line has higher electrostatic capacity than that between the electrode pair, and is more influential.

Thus, the present invention controls potential on a number of data lines with the potential control means so that the potential on the data line closes to the data voltage being applied before the data voltage is applied to the data line. Then, when the data voltage is applied to each data line, at least each data line would have potential at a value close to the data voltage being applied next. Thus, the time is shortened from starting of application of the data voltage to the time when the voltage between the electrode pair of the display cell reaches the predetermined voltage.

Accordingly, even if the duration is short for the application of data voltage to each data line, the voltage between the electrode pair reaches the predetermined voltage corresponding to the magnitude of applied data voltage so that the light transmittance of the liquid crystal of each display cell can be caused to match that corresponding to the value of gradation to be displayed on each display cell. Thus, an image can be displayed with high quality even if the duration of application of data voltage is short.

In addition, the present invention is the above driving device, wherein a number of the data lines consists of a plurality of data line groups, and the data line driving means sequentially applies a data voltage to the data line in each data line group in the predetermined duration.

The above arrangement could perform multiplex driving in which the data voltage is sequentially applied to a number of data lines in each of data line groups. As described above, since, according to the present invention, an image can be displayed at high quality even if the duration of data voltage application is short, the image can be displayed at high quality even when the multiplex ratio is increased, that is, even when the number of data lines constituting each data line group is reduced, and the number of data line groups is increased (this shortens the duration of data voltage application). In addition, since the number of data lines constituting each data line group can be reduced, it is easily attained to increase the size and definition of a liquid crystal display.

Furthermore, more particularly, the potential control means controls the potential on the data line so that the voltage between the electrode pair becomes a value sufficient to change to the predetermined voltage while the data line driving means applies the data voltage to the data line.

Furthermore, the potential control means may control the potential on the data line so that, for example, the potential on the data line becomes the average value of the data voltage applied by the data line driving means or the minimum absolute value of the data voltage.

Furthermore, the present invention is the above driving device, wherein the data line driving means applies to parts of data lines a voltage with a polarity different from that to the remaining data lines, and the potential control means controls the potential on the data lines by electrically connecting the data lines applied with voltages with different polarities as the data voltage.

When data voltages with different polarities are applied to a pair of data lines, they have potentials with polarities different each other. Here, if both data lines are electrically connected, a current flows to equalize the potential on both data lines (charges being moved) so that the potential on both data lines can be equalized without consuming electric power. Therefore, in a case where data voltage is applied to each of a number of data lines in such a manner that the polarity of data voltage being applied is reversed every time, the potential on the data line can be made close to the data voltage applied next time without consuming electric power by electrically connecting the data lines to which voltages with polarities different each other is applied as the data voltage so that the power consumption can be reduced.

In driving the liquid crystal display, it is typical to reverse the polarity of voltage applied to each display cell of the liquid crystal display every time. Thus, in a case where parts of the data lines are applied with a voltage with polarity different from that for remaining data lines as the data voltage, and the polarities of data voltages applied to the parts of data lines and the remaining data lines are changed in such a manner that the polarity of voltage applied to each display cell is reversed every time, if the data lines applied with voltages with polarity different each other as the data voltage are electrically connected as described above while a voltage is being applied to a gate line connected to a display cell in which the voltage between the electrode pair is changed by a data voltage being applied to the data line next time, then current is caused to flow to equalize the voltage between the electrode pair of each display cell so that the voltage between the electrode pair of each display cell can be of a value close to the data voltage applied next time without consuming electrical power. Therefore, the power consumption can be further reduced.

In addition, the potential control means may control each of a number of data lines during the time from when the data line driving means applies the data voltage to the data line previous time to when it applies the data voltage next time.

Furthermore, the present invention is the above driving device, wherein the potential control means controls the potential on the data line during the time when a voltage is being applied to the gate line connected to a display cell in which the voltage between the electrode pair is changed by the data voltage applied to the data line next time.

The control of potential on the data line according to the present invention may be performed while a voltage is not being applied to any gate line. However, as described above, if the potential on the data line is controlled while a voltage is being applied to the gate line connected to a display cell in which the voltage between the electrode pair is changed by the data voltage applied to the data line next time, the voltage between the electrode pair of the display cell connected to the gate line also approaches to the data voltage applied next time as the potential on the data line is controlled so that it is possible to further shorten the time from starting of application of the data voltage to when the voltage between the electrode pair changes to a value corresponding to that of gradation to be displayed on the display cell. Thus, the duration of data voltage application can be further shortened.

Furthermore, according to the present invention, the potential control means may comprise potential changing means for changing the potential on the data line, a number of switching means provided between the potential changing means and a number of the data lines, and ON/OFF control means for controlling turning on/off of a number of the switching means.

Furthermore, a method for driving a liquid crystal display according to the present invention is a driving method for driving a liquid crystal display in which a number of data lines and a number of gate lines are arranged to intersect with each other, and respective display cells are positioned at the intersections of the data and gate lines, the display cell consisting of a switching element connected to a data line and a gate line, a pair of electrodes oppositely positioned with a predetermined spacing, and liquid crystal disposed between the pair of electrodes, the driving method comprising steps of applying a voltage to the gate lines to turn on for a predetermined duration the switching element of the display cell connected to the gate line, applying a data voltage to the data line within the predetermined duration to change a voltage between the electrode pair of the display cell to a predetermined voltage, and controlling the potential on the data line so as to close to the data voltage being applied prior to the data voltage application step, whereby the control step allows to shorten the time from when the data voltage is applied to when the voltage between the electrode pair of the display cell reaches the predetermined voltage.

Thus, as in the above, even when the duration is short in applying the data voltage to each data line, because the voltage between the electrode pair of the display cell reaches a predetermined voltage corresponding to the magnitude of the applied data voltage allowing the light transmission of the liquid crystal of each display cell to match the light transmission corresponding to the value of gradation to be displayed on each display cell. Thus, an image can be displayed at high quality even if the duration of application of data voltage is short.

In addition, the present invention is the above driving method, wherein a number of the data lines consists of a plurality of data line groups, and the data voltage application step sequentially applies the data voltage by the data line group within the predetermined duration for each data line group.

As described above, since, according to the present invention, an image can be displayed at high quality even if the duration of data voltage application is short, the image can be displayed at high quality even when the multiplex ratio is increased, that is, even when the number of data lines constituting each data line group is reduced, and the number of data line groups is increased (this shortens the duration of data voltage application). In addition, since the number of data lines constituting each data line group can be reduced, it is easily attained to increase the size and definition of a liquid crystal display.

More particularly, the control step may control the potential on the data line so that the voltage between the electrode pair becomes a value sufficient to change to the predetermined voltage while the data voltage is applied in the data voltage application step.

Furthermore, the control step may control the potential on the data line so that, for example, the potential on the data line becomes the average value or the minimum absolute value or the data voltage.

Furthermore, the present invention is the above driving method, wherein the data voltage application step applies to parts of data lines a voltage with polarity different from that on the remaining data lines, and the control step controls the potential on the data line by electrically connecting the data lines applied with voltages with polarities different each other as the data voltage. Thus, as in the above, the potential on the data line can be made close to the data voltage applied next time without consuming electric power so that the power consumption can be reduced.

Furthermore, the control step may be performed during the time from the application of data voltage to the data voltage previous time to the next application.

Furthermore, the present invention is the above driving method, wherein the control step is performed while a voltage is being applied to the gate line connected to a display cell in which the voltage between the electrode pair is changed by the data voltage applied to the data line next time. Thus, it is possible to further shorten the time from starting of application of the data voltage to when the voltage between the electrode pair of the display cell changes to a value corresponding to that of gradation to be displayed on the display cell so that the duration of data voltage application can be further shortened.

### Brief Description of the Drawings:

The invention will now be described, by way of example only, with reference to the accompanying drawings, in which:
Figure 1 is a schematic diagram of the arrangement of an LCD unit according to a first embodiment;
Figure 2 is a sectional view of an LCD;
Figure 3 is a timing chart in which (A) and (B) show changes of gate voltage and data voltage, (C) shows an example of application timing of precharge voltage according to the first embodiment, (D) shows changes of voltage between the electrode pair of a display cell in the first embodiment, and (E) shows changes of voltage between the electrode pair of a display cell in the second embodiment;
Figure 4 is a conceptional diagram in which (A) to (D) show variations of changing-over of polarity of data voltage applied to respective display cells of the LCD;
Figure 5 is a schematic arrangement of an LCD unit according to the second embodiment;
Figure 6 is a schematic arrangement of an LCD unit according to the third embodiment;
Figure 7 is a schematic arrangement of an LCD unit according to the fourth embodiment;
Figure 8 is a conceptional diagram in which (A) illustrates how electrical power is uselessly consumed as the data voltage is applied by a conventional driving method, and (B) illustrates the operation of the fourth embodiment;
Figure 9 (A) and (B) are diagrams showing the results of simulations conducted by the inventors; and
Figure 10 is a timing chart in which (A) shows changes of gate voltage, (B) and (C) show changes of data voltage and voltage between the electrode pair when multiplex driving is not performed, and (D) and (E) show changes of data voltage and voltage between the electrode pair when multiplex driving is performed.

### Detailed Description of the Invention

### First embodiment

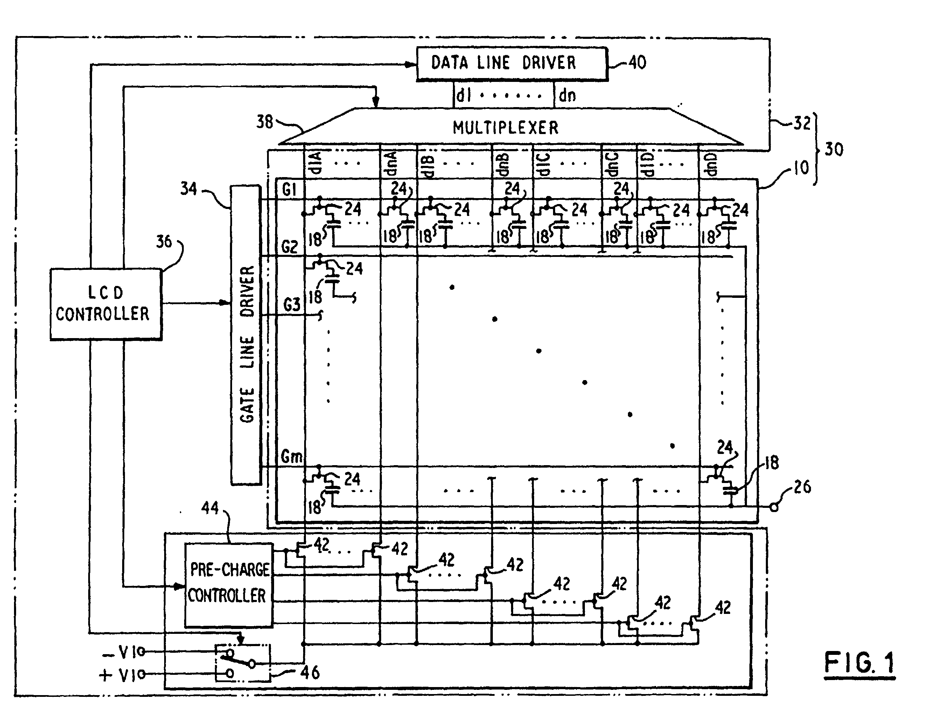

Figure 1 shows a liquid crystal display unit (LCD unit) 30 according to this embodiment. The LCD unit 30 comprises a driving device 32 as the driver for the liquid crystal display according to the present invention, and a reflective type liquid crystal display (LCD) 10 as the liquid crystal display.

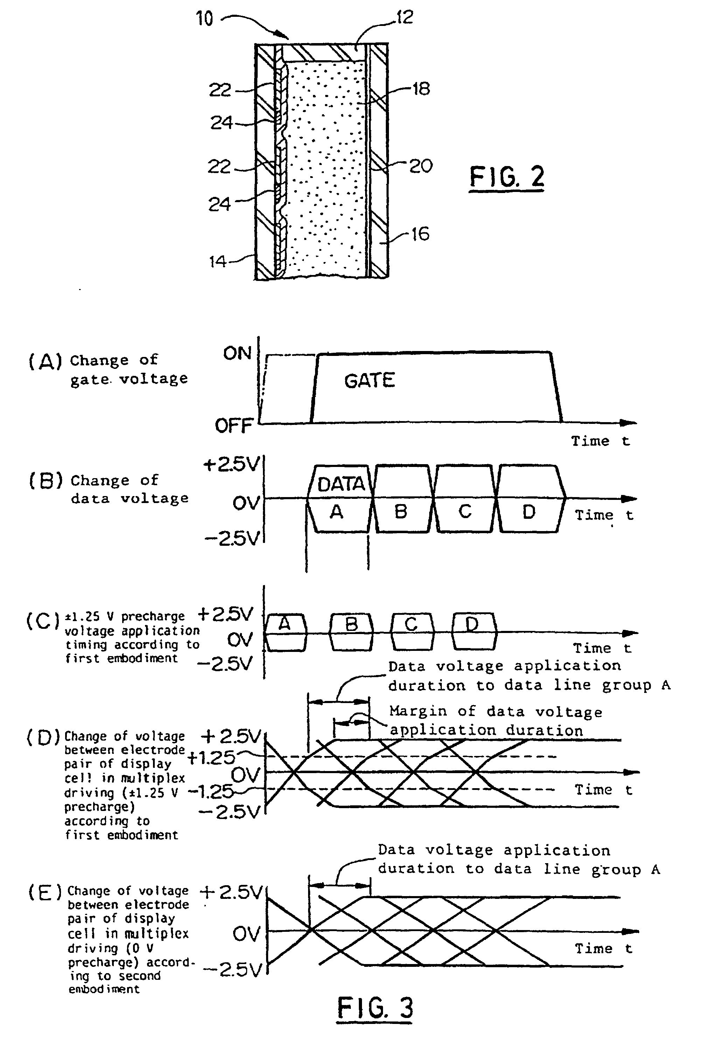

As shown in Figure 2, the LCD 10 comprises a pair of substrates 14 and 16 (the substrate 16 being transparent) oppositely disposed with a predetermined spacing by the spacer 12, between which liquid crystal 18 is sealed. A transparent electrode 20 is formed on the entire surface of the side of substrate 16 contacting the liquid crystal 18. Formed on the surface of substrate 14 contacting the liquid crystal 18 is a crystalline silicone layer on which a number of thin film transistors (TFTs) 24 are formed in a matrix (see Figure 2). An electrode 22 is provided in correspondence to each of TFTs 24.

Figure 1 shows the circuit for LCD 10 in a simplified form. While illustration is omitted, the electrodes 22 are connected to the source of respective TFTs 24, and the liquid crystal 18 is held between the electrode 22 and the transparent electrode 20. In Figure 1, the liquid crystal 18, the electrode 22, and the transparent electrode 20 for a single picture element are schematically shown by using the symbol for capacitor and with the reference "18" for the liquid crystal. The liquid crystal 18 corresponding to a single picture element constitutes a display cell of the present invention together with the electrode 22, the transparent electrode 20, and the TFT 24. The transparent electrode 20 is connected to a common terminal 26. In the embodiment, the common terminal 26 is grounded to make the potential of transparent electrode 20 constant (ground potential).

The LCD 10 has m gate lines G1 - Gm extending along a predetermined direction toward the substrate 14. A gate of respective TFTs 24 is connected to any one of the gate lines G1 - Gm. Each of gate lines G1 - Gm is connected to a gate line driver 34 as gate line driving means, which is then connected to an LCD controller 36.

Provided on the side of substrate 14 of the LCD 10 are 4 x n data lines d1A - dnA, d1B - dnB, d1C - dnC, and d1D - dnD extending in a direction intersecting the gate lines G1 - Gm. A drain of respective TFTs 24 is connected to any one of the data lines. The data lines are grouped into four data line groups d1A - dnA (data line group A), d1B - dnB (data line group B), d1C - dnC (data line group C), and d1D - dnD (data line group D) each of which consists of n data lines. One end of each data line is connected to a multiplexer 38 having output terminals in the same number as total number of data lines (4 x n). The multiplexer 38 has n input terminals each of which is connected to a data line driver 40 through respective signal lines dl - dn. The data line driver 40 and the multiplexer 38 correspond to the data line driving means of the present invention. The data line driver 40 and the multiplexer 38 are connected to the LCD controller 36.

The other end of each data line is connected to the source of respective transistors 42. In the following, to distinguish respective transistors, n transistors connected to the data line group A d1A - dnA are called a "transistor group 42A," n transistors connected to the data line group B d1B - dnB are called a "transistor group 42B," n transistors connected to the data line group C d1C - dnC are called a "transistor group 42C," and n transistors connected to the data line group D d1D - dnD are called a "transistor group 42D." The gate of each transistor in the transistor groups 42A, 42B, 42C, and 42D is connected to a precharge controller 44 which is connected to the LCD controller 36. Each transistor 42 corresponds to the switching means of the present invention, and the precharge controller 44 corresponds to the ON/OFF control means of the present invention.

In addition, the drain of each transistor in the transistor groups 42A, 42B, 42C, and 42D is connected to a voltage switching circuit 46. The voltage switching circuit 46 is connected to the LCD controller 36, and supplied with precharge voltages +V₁ and -V₁. The voltage switching circuit 46 applies the precharge voltages +V₁ and -V₁ to the drain of the transistor according to an instruction from the LCD controller 36. The transistor groups 42A, 42B, 42C, 42D, the precharge controller 44, the voltage switching circuit 46, and the LCD controller 36 correspond to the potential control means of the present invention. The voltage switching circuit 46 corresponds to the potential changing means of the present invention.

The precharge voltage +V₁ may be a value of one-half of the maximum value of data voltage which is described later, and the precharge voltage -V₁ may be a value of one-half of the minimum value of data voltage. As an example, if the maximum value of data voltage is +2.5 V, and the minimum value is -2.5 V, the precharge voltage +V₁ = +1.25 V, -V₁ = -1.25 V (that is, average values of applied data voltage). Although the voltage switching circuit 46 is schematically shown as a switch in Figure 1, it actually includes a switching element such as a transistor.

Now, the operation of the first embodiment is explained. When an image is displayed on the LCD 10, the LCD controller 36 controls the operation of the gate line driver 34 in such a manner that any one of m gate lines G1 - Gm is applied for a predetermined duration with a gate voltage turning on the TFT 24 connected to that gate line, and the gate lines applied with the gate voltage are sequentially changed over by the predetermined duration. The LCD controller 36 sequentially outputs image data representing gradation values to be displayed on each display cell in a display cell array connected to the gate line applied with the gate voltage to the data line driver 40 in synchronization with the timing in which the gate line driver 34 changes over the gate lines applied with the gate voltage.

The data line driver 40 sequentially outputs image data for n display cells connected to a predetermined data line group from the input image data representing the gradation value to be displayed on each display cell, outputs voltage with magnitude corresponding to the gradation value represented by the taken-out image data (data voltage) to the multiplexer 38 through the signal lines dl - dn, and repeats these operations. Thus, the data line driver 40 outputs the data voltage to be applied to the display cells connected to each data line group to the multiplexer 38 in an order from the data line group A. The multiplexer 38 applies the data voltage output from the data line driver 40 to respective data lines of the corresponding data line group.

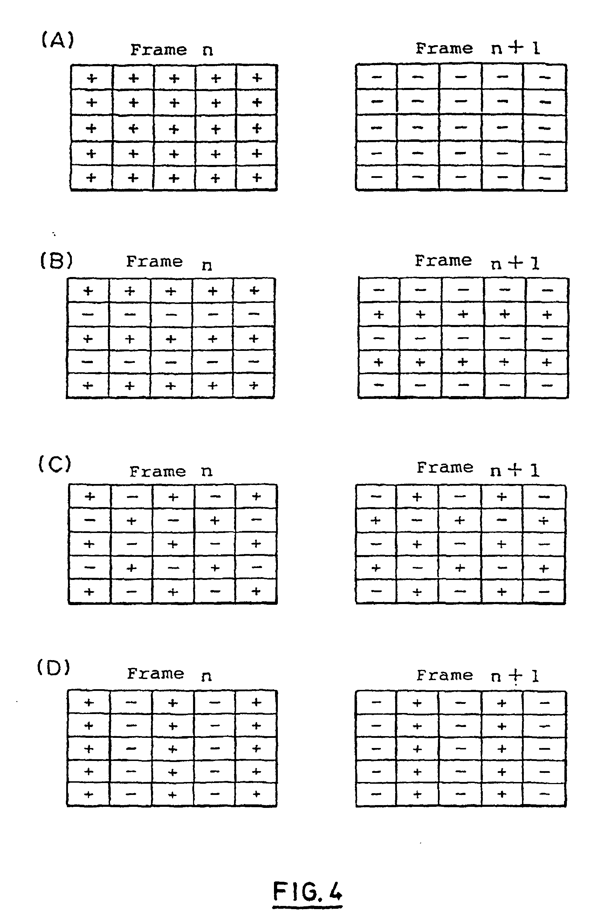

Thus, also as shown in Figure 3 (B), the data voltage is applied to the data line groups A - D in this order within the duration when the gate voltage is applied to a predetermined gate line. The data voltage is then applied between an electrode pair consisting of the electrode 22 and the transparent electrode 20 of respective display cells for which TFT 24 is turned on. As described, the driving device 32 according to this embodiment performs multiplex driving with multiplex ratio n = 4 for the LCD 10.

As for the polarity of data voltage, it may be acceptable to, as shown in Figure 4 (A), apply a data voltage with the same polarity to all display cells of the LCD when displaying the image of a frame, and to reverse the polarity of data voltage every one frame, or to, as shown in Figure 4 (B), apply a data voltage with the same polarity to an array of display cells connected to a same gate line when displaying the image of a frame, to reverse the polarity of data voltage every gate line, and, for the next frame, to apply a data voltage with polarity different from that of data voltage applied the previous time to each display cell array.

In addition, the LCD controller 36 changes over the voltage switching circuit 46 in such a manner that, if the polarity of data voltage applied to each data line through the data line driver 40 and the multiplexer 38 is positive, the precharge voltage +V₁ is applied to the drain of each transistor in the transistor groups 42A - 42D, and, if the polarity of data voltage applied to each data line is negative, the precharge voltage -V₁ is applied to the drain of each transistor. That is, when the polarity of data voltage is reversed every one image frame as shown in Figure 4 (A), the precharge voltage is also switched every one image frame, and when the polarity of data voltage is reversed every one gate line as shown in Figure 4 (B), the precharge voltage is also switched every one gate line.

Furthermore, the LCD controller 36 sequentially turns on the transistor groups 42A - 42D connected to the data line groups A - D through the precharge controller 44 at the timing shown in Figure 3 (C).

Thus, a precharge voltage (+V₁ or -V₁) with the same polarity as that of the data voltage applied next time is applied to a data line before application of data voltage by the data line groups A - D. Therefore, if the data voltage is applied through the data line driver 40 and the multiplexer 38, the potential on each data line is changed to a value substantially equal to the applied precharge voltage, or a value close to the data voltage applied next time (an average value of data voltage being applied if the range of data voltage is +2.5 V - -2.5 V, and the precharge voltage is +1.25 V or -1.25 V).

In addition, when the precharge voltage is applied to the data line groups B - D, also as shown in Figure 3 (A), because the gate voltage is applied to the gate line, and the TFT 24 of each display cell in the display cell array connected to the gate line is turned on, the precharge voltage is applied between the electrode pair for the display cell in the display cell array connected to any one of respective data lines in the data line groups B - D, and the voltage between the electrode pair of the display cell substantially matches the precharge voltage when the data voltage is applied.

Therefore, when it is started to apply the data voltage for each data line group, also as shown in Figure 3 (D), the voltage between the electrode pair of a display cell in which the TFT 24 is turned on reaches a value corresponding to the data voltage applied before the data voltage application duration completes when compared with a case where no precharge is performed (see Figure 10 (E)). Because the light transmittance of the liquid crystal 18 disposed between the electrode pair varies in accordance with the voltage between the electrode pair, the above causes the light transmittance of the liquid crystal 18 to match that corresponding to the value of gradation to be displayed on the display cell. This enables it to display an image at high quality even when the multiplex ratio is high and the duration of application of the data voltage is short for each display cell.

While, in the above, the transistors in the transistor group A are turned on when the gate voltage is not applied to the gate line, it is not limited to such approach. As shown in Figure 3 (A) with imaginary lines, it is allowed that the gate voltage is applied to the gate line even when each transistor in the transistor group 42A is turned on by advancing the timing to start application of the gate voltage to the gate line. Then, because, also for each display cell connected to the data line groups A d1A - dnA connected to the transistor group 42A, the voltage between the electrode pair would be caused to be substantially equal to the precharge voltage when the data voltage is applied, the time is more reduced from the time when it is started to apply the data voltage to the time when the voltage between the electrode pair matches the data voltage, which is preferable.

In addition, for the above approach, when the data voltage with positive polarity is applied, each data line and the voltage between the electrode pair of each display cell applied with the data voltage are +V₁, and when the data voltage with negative polarity is applied, the potential on the data line is -V₁ so that it becomes possible to reduce the amplitude of data voltage to be driven by the data line driver 40 (if it is assumed that the maximum value of the data voltage is +2.5 V, the minimum value is -2.5 V, and the precharge voltage V₁ is ±1.25 V, the amplitude can be made +2.5 V - 1.25 V to -2.5 V + 1.25 V, or +1.25 V to -1.25V).

Furthermore, although, in the above, the transistors in each of the transistor groups 42A - 42D are turned on at different timing with each other, it is not limited to such approach. For example, at the timing for turning on the transistor group 42A as shown in Figure 3 (C), all transistors in the transistor groups 42A - 42D may be turned on. Also, as described in the above, it is needless to say that the gate voltage is preferably applied to the gate line as shown in Figure 3 (A) with imaginary lines.

### Second embodiment

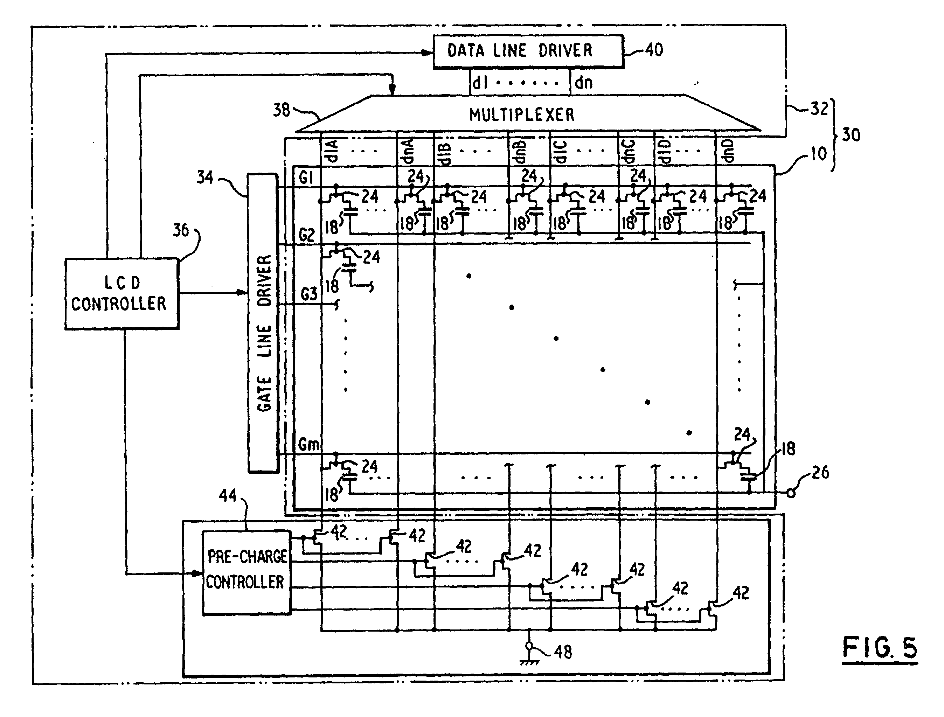

Next, the second embodiment of the present invention is explained. Components same as or similar to those of the first embodiment are attached with the same reference numerals and their description is omitted. As shown in Figure 5, the voltage switching circuit 46 is omitted from the driving device 50 according to the second embodiment. The drain of each of transistors in the transistor groups 42A, 42B, 42C, and 42D is grounded through the terminal 48. In the second embodiment, wiring connecting the drain of each transistor and the grounding terminal corresponds to the potential control means of the present invention.

Next, the operation of the second embodiment is explained. In the second embodiment, the data line driver 40 changes over the polarity of data voltage as shown in Figure 4 (B) to display an image on the LCD 10. The precharge controller 44 sequentially turns on the transistor groups 42A - 42D connected to the data line groups A - D in this order in the timing shown in Figure 3 (C). When the polarity of data voltage is changed over as shown in Figure 4 (B), the polarity of data voltage applied on respective data line is reversed every time. However, when each transistor in the transistor groups 42A - 42D is turned on, the data line connected to at least the turned on transistor has the potential of zero volt (ground potential). Accordingly, the potential on each data line when the data voltage is applied would be a value close to the data voltage being applied (more particularly, the maximum absolute value of the data voltage to be allied).

For the data line groups B - D, because the gate voltage is applied to the gate line when each transistor in the transistor groups 42B - 42D, and the TFT 24 of each display cell in the display cell array connected to the gate line is turned on, the voltage between the electrode pair is also made zero volt for the display cell connected to any data line of the data line groups B - D of the display cell array. Since the polarity of data voltage applied to respective display cell is reversed every time, the voltage between the electrode pair of each display cell connected to the data line groups B - D is changed to a value close to the data value being applied when the data voltage is applied through the data line driver 40 and the multiplexer 38.

Therefore, when it is started to apply the data voltage to each data line group, also as shown in Figure 3 (E), the voltage between the electrode pair of the display cell reaches a value corresponding to the data voltage prior to expiration of data voltage application duration earlier than the conventional arrangement (Figure 10 (E)). The light transmittance of the liquid crystal 18 of the display cell also matches the light transmittance corresponding to the gradation value to be displayed on the display cell. Thus, an image can be displayed at high quality even when the multiplex ratio is high and the duration of application of the data voltage is short for each display cell.

Also in the second embodiment, at the timing for turning on the transistor group 42A as shown in Figure 3 (C), all transistors in the transistor groups 42A - 42D may be turned on. Also, the gate voltage is preferably applied to the gate line as shown in Figure 3 (A) with imaginary lines.

In addition, when the polarity of data voltage is changed over by one frame of image as shown in Figure 4 (A) to display an image on the LCD 10, because the data voltage with the same polarity is applied to each data line while one frame of the image is displayed, the potential on each data line when the data voltage is applied has the same polarity as that of the data voltage being applied, except for the time when the data voltage is applied to the top display cell array connected to the gate line G1. Thus, it is not preferable to turn on the transistor when the gate voltage is not applied to any of the gate lines G1 - Gm as in the transistor group A to change only the potential on the data line.

Therefore, when an image is displayed on the LCD 10 by changing over the polarity of data voltage every one image frame, it is sufficient to turn on each transistor in the transistor groups 42A - 42D while the gate voltage is being applied to the gate line by advancing the timing to start application of the gate voltage to the gate line (sequentially turning on each transistor in the transistor groups 42A - 42D at the timing shown in Figure 3 (C), or turning on all transistors in the transistor groups 42A - 42D at the timing shown in Figure 3 (C) when the transistor group 42A is turned on). Thus, when the data voltage is applied to each display cell, the voltage between the electrode pair of each display cell would be changed to 0V, that is, a value close to the data voltage being applied.

Although the terminal 48 is grounded in the above, instead the terminal 48 may be applied with a constant voltage. For example, when the maximum absolute value of data voltage depends on the polarity of data voltage, it is possible to apply to the terminal 48 a voltage corresponding to the average value of the maximum value of data voltage when the polarity is positive and the maximum value of data voltage when the polarity is negative (minimum value of data voltage). Thus, even when the maximum absolute value of data voltage depends on the polarity of data voltage, the time from starting the data voltage application to the data line until the voltage between the electrode pair of the display cell reaches a value corresponding to the value of gradation to be displayed on the display cell can be made constant regardless of the polarity of data voltage being applied.

### Third embodiment

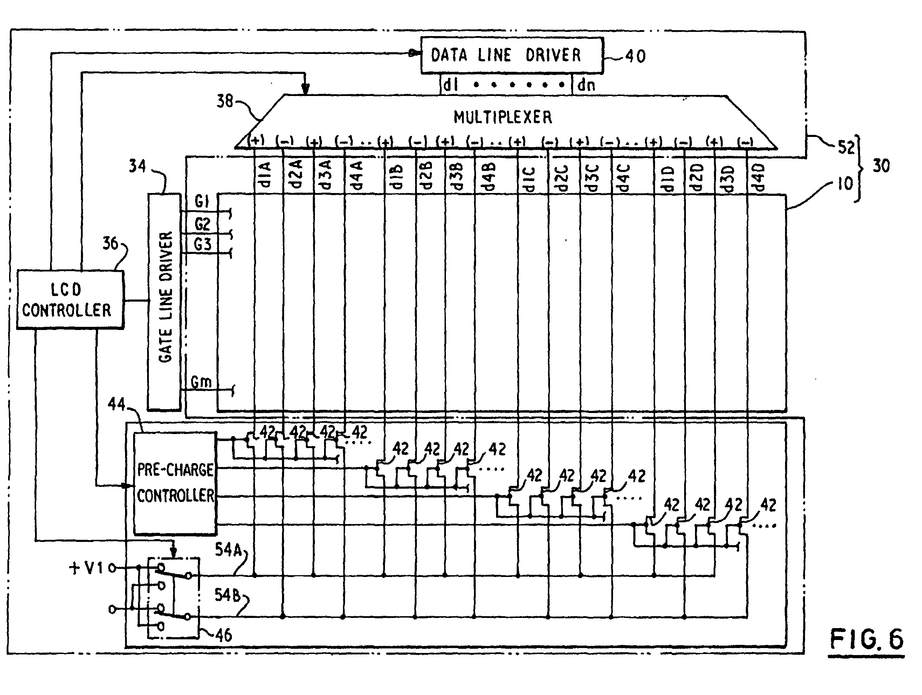

Now, the third embodiment of the present invention is explained. Components same as or similar to those of the first embodiment are attached with the same reference numerals and their description is omitted. As shown in Figure 6, in the driving device 52 according to the third embodiment, the drains of transistors in the transistor groups 42A, 42B, 42C, and 42D the sources of which are connected to the respective odd-numbered data lines in the data line groups A, B, C, and D (that is, data lines d1A, d3A, ... d1B, d3B, ... d1C, d3C, ... d1D, d3D, ...) are connected to a power supply line 54A, while the drains of transistors the sources of which are connected to the respective even-numbered data lines in the data line groups A, B, C, and D (that is, d2A, d4A, ... d2B, d4B, ... d2C, d4C, ... d2D, d4D, ...) are connected to the power supply line 54B.

The power supply lines 54A and 54B are connected to the voltage switching circuit 46. The voltage switching circuit 46 applies the precharge voltage +V₁ or -V₁ to the power supply lines 54A and 54B according to an instruction from the LCD controller 36. However, the polarities of the precharge voltage the voltage switching circuit 46 applies to the power supply lines 54A and 54B are different each other. Then, when the precharge voltage +V₁ is applied to the power supply line 54A, the precharge voltage -V₁ is applied to the power supply line 54B, and when the precharge voltage -V₁ is applied to the power supply line 54A, the precharge voltage +V₁ is applied to the power supply line 54B. In the third embodiment, the power supply lines 54A and 54B, and the voltage switching circuit 46 correspond to the potential changing means of the present invention.

Next, the operation of the third embodiment is explained. The data line driver 40 according to the third embodiment applies the data voltage with polarity different each other to the odd-numbered data lines and the even-numbered data lines in the data line groups A, B, C, and D (see Figure 4 (C) or (D)). The polarity of the data voltage applied to each data line may be reversed every one gate line as shown in Figure 4 (C), or reversed every one image frame as shown in Figure 4 (D).

In addition, the LCD controller 36 changes over the voltage switching circuit 46 in such a manner that, if the polarity of the data voltage applied to the odd-numbered data lines in the data line groups A, B, C, and D through the data line driver 40 and the multiplexer 38 is positive (that is, the polarity of the data voltage applied to the even-numbered data lines is negative), the precharge voltage +V₁ is applied to the power supply line 54A and the precharge voltage -V₁ is applied to the power supply line 54B, and that, if the polarity of the data voltage applied to the odd-numbered data lines is negative (that is, the polarity of the data voltage applied to the even-numbered data lines is positive), the precharge voltage -V₁ is applied to the power supply line 54A and the precharge voltage +V₁ is applied to the power supply line 54B.

That is, when the polarity of the data voltage applied to each data line is reversed every one gate line as shown in Figure 4 (C), the operation of the voltage switching circuit 46 is controlled in such a manner that the polarity of the precharge voltage applied to the power supply lines 54A and 54B is also changed over every one gate line. When the polarity of the data voltage applied to each data line is reversed every one image frame as shown in Figure 4 (B), the operation of the voltage switching circuit 46 is controlled in such a manner that the polarity of the precharge voltage applied to the power supply lines 54A and 54B is also changed over every one image frame. In addition, the LCD controller 36 sequentially turns on the transistor groups 42A - 42D connected to the data line groups A - D through the precharge controller 44 at the timing shown in Figure 3 (C).

Thus, as in the first embodiment, the precharge voltage with the same polarity as the data voltage applied to each data line next time (+V₁ or -V₁) is applied to each of the data line groups A - D. The potential on each data line when the data voltage is applied is changed to a value close to the data voltage being applied (for example, when the data voltage ranges +2.5 V - -2.5 V, and the precharge voltage is +1.25 V or -1.25 V, a value close to the average value of the data voltage being applied), the precharge voltage is applied between the electrode pair for a display cell connected to any one of data lines in the data line groups B - D, and, when the data voltage is applied, the voltage between the electrode pair of the display cell becomes a value substantially matching the precharge voltage.

Therefore, when it is started to apply the data voltage to each data line group, also as shown in Figure 3 (D), because the voltage between the electrode pair of a display cell the TFT 24 of which is turned on reaches a value corresponding to the data voltage before the data voltage application duration expires, and the light transmittance of the liquid crystal 18 of the display cell would match that of the value of gradation to be displayed on the display cell. Thus, an image can be displayed at high quality even when the multiplex ratio is high and the duration of application of the data voltage is short for each display cell.

Also in the third embodiment, as shown in Figure 3 (A) with imaginary lines, it may be possible that the gate voltage is applied to the gate line even when each transistor in the transistor group 42A is turned on by advancing the timing to start application of the gate voltage to the gate line. It may be also possible that all transistors in the transistor groups 42A - 42D are simultaneously turned on at the timing shown in Figure 3 (C) when the transistor group 42A is turned on. In such case, it is needless to say that the gate voltage is preferably applied to the gate line as shown in Figure 3 (A) with imaginary lines.

### Fourth embodiment

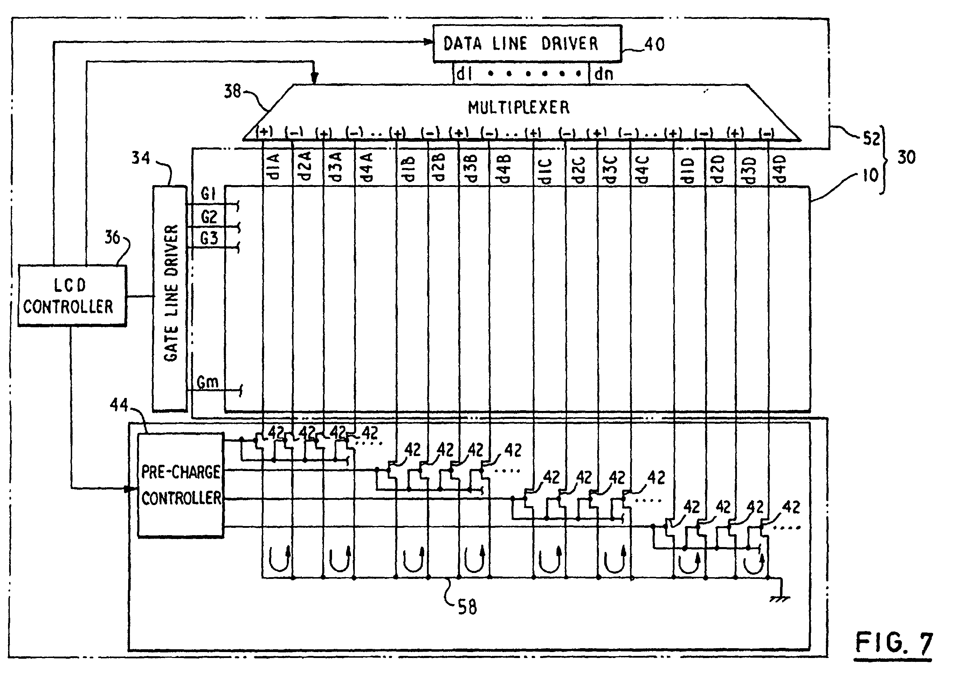

Next, the fourth embodiment of the present invention is explained. Components same as or similar to those of the third embodiment are attached with the same reference numerals and their description is omitted. As shown in Figure 7, the voltage switching circuit 46 is omitted from the driving device 56 according to the fourth embodiment. The drains of transistors in the transistor groups 42A, 42B, 42C, and 42D are grounded through the grounding conductor 58. In the fourth embodiment, the grounding conductor 58 corresponds to the potential changing means of the present invention.

Next, the operation of the fourth embodiment is explained. The data line driver 40 according to the fourth embodiment applies, as in the third embodiment, the data voltage with polarity different each other to the odd-numbered data lines and the even-numbered data lines in the data line groups A, B, C, and D, and reverses the polarity of data voltage applied to each data line by every one gate line (see Figure 4 (C)). In addition, the LCD controller 36 sequentially turns on the transistor groups 42A - 42D connected to the data line groups A - D at the timing shown in Figure 3 (C).

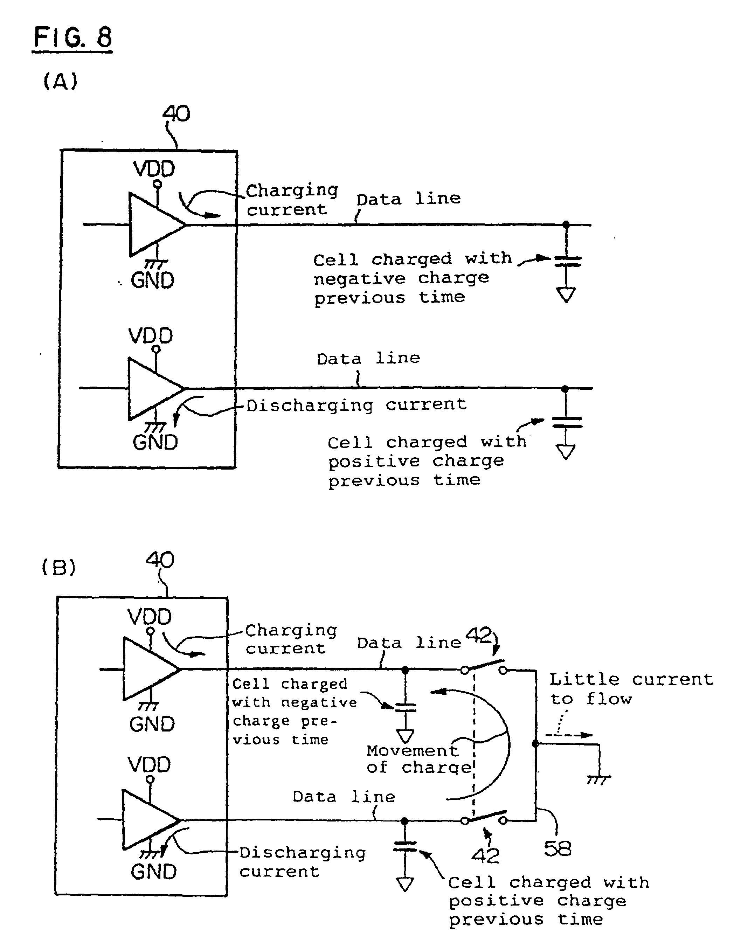

Since, in the fourth embodiment, voltages with different polarities are applied to adjacent data lines as the data voltage, the adjacent data lines have potential with polarity different each other. Thus, when each transistor in the transistor groups 42A - 42D is turned on, charges move in the direction indicated by an arrow in Figure 7 or opposite direction through the grounding conductor 58 so as to make the potential on the adjacent data lines equally zero volt. When each transistor in the transistor groups 42A - 42D is turned on, because the gate voltage is applied to the gate line, the TFT 24 of each display cell connected to the gate line is turned on, and, for the display cell connected to any one of data lines in the data line groups B - D, charges move through the grounding conductor 58 to make equally zero volt with the voltage between the electrode pair of a pair of display cell connected to the adjacent data lines, respectively, as shown in Figure 8 (B).

Figure 8 (B) schematically shows the transistor 42 and the data line driver 40, and the multiplexer 38 is omitted for illustration.

It is typical to reverse every time the potential of the data voltage applied to respective display cells of the LCD 10. In the conventional driving method, as schematically shown in Figure 8 (A), the display cell to which the data voltage with positive potential is applied previous time is caused to have the voltage between the electrode pair of zero volt as the charges accumulated between the electrode pair flows as a discharge current to the ground terminal when the data voltage is applied next time so that the voltage between the electrode pair is made zero volt. Further, the potential of the electrode pair becomes negative by applying the data voltage with negative potential. In addition, the display cell to which the data voltage with negative potential is applied previous time has the voltage between the electrode pair of zero volt when the data voltage with positive polarity is applied next time, and a charging current flows until the polarity of the voltage between the electrode pair reaches a predetermined positive value. Therefore, the charges accumulated between the electrode pair of the display cell to which the data voltage is applied (and, charges accumulated in the data lines) are uselessly disposed. This is also true to the first to third embodiment described above.

On the contrary to the above, in the fourth embodiment, by turning on each transistor in the transistor groups 42A - 42D, charges move through the grounding conductor 58 so that the potential on the adjacent data lines (for the data line groups B - D, also the voltage between the electrode pair of a pair of display cells connected to the adjacent data lines, respectively) also becomes equal. In this case, if the absolute values of potentials on the adjacent data lines are equal, no charge flows to the grounding terminal so that the potentials on the adjacent data lines can be made zero volt equally without wasting any electrical power. Thus, the electrical power consumed by driving the data line can be reduced by 50%.

However, since each data line is applied with the data voltage with magnitude corresponding to the value of gradation to be displayed on each display cell, the potential on the data line when the transistor is turned on has a value corresponding to the magnitude of data voltage previously applied, the absolute values of potentials on the adjacent data lines are not necessarily equal. If the absolute values of potentials on the adjacent data lines, when the transistor is turned on, charges (current) not contributing change of the potential on the data line (and, the voltage between the electrode pair of the display cell), although it is very small, flows from the grounding conductor 58 to the grounding terminal.

Therefore, although the reduction of power consumption is slightly less than 50%, it is possible to make the potentials on the adjacent data lines (and, the voltage between the electrode pair of a pair of display cells connected to the adjacent data lines, respectively) zero volt equally consuming substantially no electrical power (disposing substantially no accumulated charge) by more effectively utilizing the charges accumulated on the data lines or between the electrode pair of the display cell than in the prior art so that the electrical power consumed by driving the data line can be significantly reduced.

Furthermore, when the data voltage is applied, because the potential on each data line (and, the voltage between the electrode pair of each display cell connected to the data line groups B - D) is zero volt, as in the first to third embodiments, the voltage between the electrode pair of the data cell applied with the data voltage reaches a value corresponding to the data voltage before the data voltage application duration expires, and the light transmittance of the liquid crystal 18 of the display cell matches that of the value of gradation to be displayed on the display cell. Thus, an image can be displayed at high quality even when the multiplex ratio is high and the duration of application of the data voltage is short for each display cell.

Also, in the fourth embodiment, it is preferable that the gate voltage is applied to the gate line at the timing shown in Figure 3 (A) with imaginary lines so that the gate voltage has been applied to the gate line when the transistor group 42A is turned on. Then, the charge accumulated between the electrode pair of the display cell connected to the data line group A can be also effectively utilized when the data voltage is applied next time. All transistors in the transistor groups 42A - 42D may be turned on at the timing shown in Figure 3 (C) when the transistor group 42A - 42D is turned on. In such case, it is needless to say that the gate voltage is preferably applied to the gate line as shown in Figure 3 (A) with imaginary lines.

In addition, when an image is displayed on the LCD 10 by changing over the polarity of data voltage every one image frame as shown in Figure 4 (D), it is sufficient to turn on each transistor in the transistor groups 42A - 42D while the gate voltage is being applied to the gate line by advancing the timing to start application of the gate voltage to the gate line (sequentially turning on each transistor in the transistor groups 42A - 42D at the timing shown in Figure 3 (C), or turning on all transistors in the transistor groups 42A - 42D at the timing shown in Figure 3 (C) when the transistor group 42A is turned on). Thus, the voltage between the electrode pair of each display cell can be changed to zero volt, or a value close to the data voltage being applied before the data voltage is applied to each display cell so that the power consumption can be reduced, and an image can be displayed at high quality even when the duration of application of the data voltage is short for each display cell.

### Explanation of experiment results

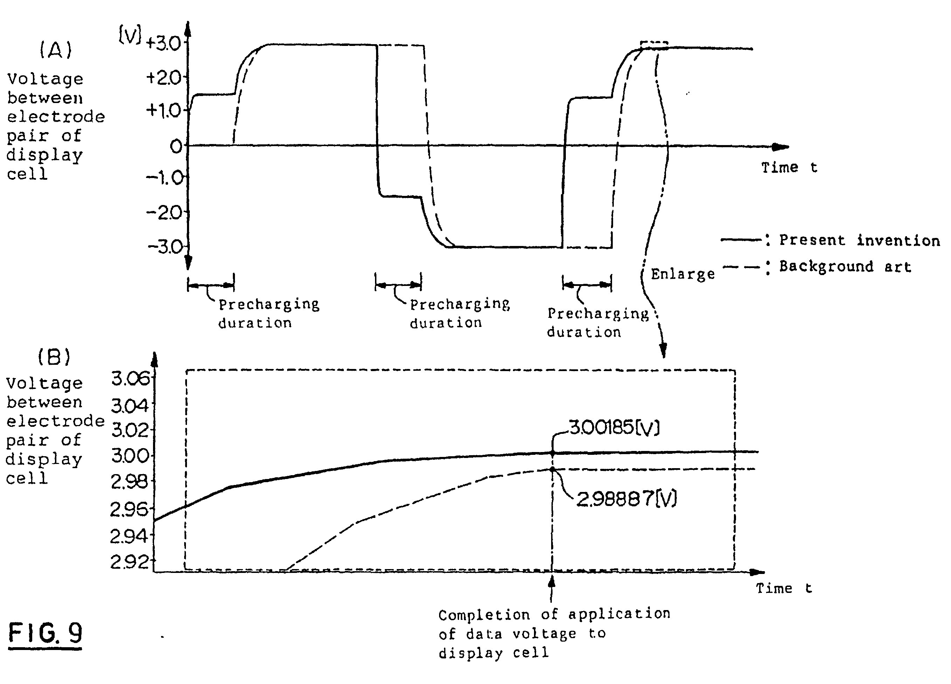

Next, explanation is given the results of experiments (simulations) conducted by the inventors. Figure 9 shows simulations on changes of voltage between the electrode pair in a case where the precharge voltage is not applied (shown by broken lines in Figure 9), and where it is charged 1.5 V or -1.5 V (shown by solid lines in Figure 9) when +3 V and -3 V which are the maximum and minimum values as the data voltage, respectively, are alternately applied to the driving device 32 described for the first embodiment.

Figure 9 (B) is an enlarged view of the area surrounded by the broken lines in Figure 9 (A). As clearly seen from Figure 9 (B), in a case where the precharging is not performed, the voltage between the electrode pair increases even when the data voltage is completed for application, but does not reach the data voltage (+3 V in this case) with a relatively steep inclination of the increase of the voltage between the electrode pair. The insufficient amount of the voltage between the electrode pair to the data voltage corresponds to the difference of voltage between the electrode pair when the value of gradation differs by "1" in this embodiment although depending on the number of gradations to be displayed on the LCD 10. Thus, it is impossible to match the light transmittance of the liquid crystal of the LCD 10 to that corresponding to the value of gradation represented by the applied data voltage.

On the other hand, in a case where the precharging is performed, as shown by the solid lines in Figure 9 (B), the voltage between the electrode pair reaches the data voltage (+3 V) when the data voltage is completed for application, and the light transmittance of the liquid crystal of the LCD 10 becomes a value exactly corresponding to the value of gradation represented by the data voltage. Therefore, according to the present invention, it is possible to match the light transmittance of the liquid crystal of the LCD 10 to that corresponding to the value of gradation to be displayed on each display cell so that an image can be clearly displayed on the LCD 10 at high quality.

For the third and fourth embodiments, although description is given by exemplifying a case where the data voltages with polarities different each other is applied to the odd-numbered and even-numbered data line groups of the data line groups A, B, C, and D, the present invention is not limited to such arrangement. It is needless to say that the data lines constituting each data line group may be divided into two groups, and data voltages with polarities different each other are applied to respective groups. However, as described for the fourth embodiment, in a case where the potential on the data line (and, the voltage between the electrode pair of display cell) is changed by electrically connecting data lines applied with the data voltages with different polarities, it is preferable to make the number of data lines constituting two groups the same number because the power consumption can be most reduced.

In addition, for the above embodiments, description is given on an example where one end of the data line is connected to the multiplexer 38, and the other end is connected to the transistor 42. The present invention is not limited to such arrangement. It may be possible to connect one end of the data line to the multiplexer 38 and the transistor 42. However, connecting one end of the data line to the multiplexer 38 and the other end to the transistor 42 is preferable because each data line can be inspected for its open or short-circuiting by using the transistor 42 and the multiplexer 38 in the inspection process for the produced LCD.

Furthermore, for the above embodiments, description is given on an example where the gates of the transistors 42 provided in correspondence to respective data lines are grouped into the transistor groups 42A, 42B, 42C, and 42D, and connected to the precharge controller 44. However, when the potential is controlled at the same timing for each data line, it may be possible to bundle and connect the gates of all transistors to the precharge controller 44.

Furthermore, the potential on the data line and the voltage between the electrode pair of the display cell may be precharged to a constant value corresponding to the maximum or minimum value of the data voltage by applying a constant voltage corresponding to the maximum or minimum value of the voltage between the electrode pair of the display cell (for example, +2.5 V or -2.5 V) to the data line while the gate voltage is applied to the gate line. Thus, the data line driver can change the voltage between the electrode pair to a desired polarity and magnitude only by always applying a voltage with a constant polarity to the data line to change the voltage between the electrode pair to a fixed direction (for example, changing the voltage between the electrode pair toward the minimum value when the voltage between the electrode pair is precharged to the maximum value, or changing the voltage between the electrode pair toward the maximum value when the voltage between the electrode pair is precharged to the minimum value) so that it becomes possible to simplify the arrangement of the data line driver.

Recently, it has been attempted to directly incorporate the driving circuit on the panel of LCD. It is a bottleneck that a CMOS structure is relatively difficult to be constructed on the panel of LCD. Contrary to this, when the simplified data line driver as described above is employed, it is possible to streamline the production process, and to attain improvement of yield in the manufacturing stage due to reduction of the number of components constituting the driving circuit so that direct assembly of the driving circuit on the LCD panel can be facilitated.

In addition, while the above description is given by exemplifying a reflective type LCD 10, the present invention is not limited to it, and may be used for a transmission type LCD. In the transmission type LCD, however, because it is impossible to use crystal silicon with very low light transmittance as in the reflective type LCD 10 as the substrate material for forming switching elements such as TFT, a substrate consisting of amorphous silicon or polysilicon is used. However, it is not easy to form logic circuits such as the multiplexer on such substrate of amorphous silicon or polysilicon when compared with the formation on the crystal silicon substrate. Therefore, if it is assumed to perform multiplex driving, it is desirable to apply the present invention to driving of a reflective type LCD.

Furthermore, although the description is given by exemplifying the embodiments performing multiplex driving, the present invention is not limited to it, but may be applied to a conventional driving system where the data voltage is applied to all data lines at the same timing.

## Claims

1. A driving device for driving a liquid crystal display (10) to which the driving device is connectable, in which a number of data lines (d1..dn) and a number of gate lines (G1..Gm) are arranged to intersect with each other, and respective display cells (18) are positioned at the intersections of the data and gate lines, said data lines consisting of a plurality of data line groups (A, B, C, D), each display cell comprising a switching element (24) connected to a data line and a gate line, a pair of electrodes (22, 20) forming a pixel capacitor, oppositely positioned with a predetermined spacing, and liquid crystal (18) disposed between said pair of electrodes, said driving device comprising:
gate line driving means (34) connectable to a number of said gate lines for applying a voltage to said gate lines to turn on for a predetermined duration said switching element of said display cell connected to said gate line; and
data line driving means (40) connectable to a number of said data lines for applying a data voltage to said data lines in each of said data line groups for said predetermined duration to change the voltage between the electrode pair of said display cell connected to said gate line to which the voltage is applied by said gate line driving means to a predetermined voltage;
**characterised in that** the driving device further comprises:
potential control means (42A, 42B, 42C, 42D, 44, 46, 36) for controlling potential on a number of said data lines so that, before the data voltage is applied to said data line in each of said data line groups by said data line driving means, the potential on said data line in each of said data line groups is controlled such that the charge time for the data line and the pixel capacitor is reduced and that the potential on data lines in only one data line group at a time is controlled.

2. A driving device for driving a liquid crystal display (10) as claimed in claim 1, wherein said potential control means includes means for controlling the potential on said data lines (d1..dn) so that the potential on said data line becomes the average value of the data voltage applied by said data line driving means (40) or the minimum absolute value of said data voltage.

3. A driving device for driving a liquid crystal display (10) as claimed in Claim 1 or Claim 2, wherein said data line driving means (40) includes means for applying to a first subset of the data lines (d1..dn) a voltage with a polarity different from the polarity applied to other than the first subset of the data lines, and said potential control means includes means for controlling the potential on said data lines by electrically connecting each of the first subset of the data lines to data lines other than the first subset of the data lines.

4. A driving device for driving a liquid crystal display (10) as claimed in any one of Claims 1 - 3, wherein said potential control means controls each of a number of said data lines (d1..dn) during the time after said data line driving means (40) applies the data voltage to said data line a previous time until before it applies the data voltage next time.

5. A driving device for driving a liquid crystal display (10) as claimed in Claim 4, wherein said potential control means controls the potential on said data line (d1..dn) during the time when a voltage is being applied to the gate line connected to a display cell (18) in which the voltage between the electrode pair is to be changed by the data voltage to be applied to the data line.

6. A driving device for driving a liquid crystal display (10) as claimed in any one of Claims 1 - 5, wherein said potential control means comprises:
potential changing means (46) for changing the potential on said data line;
a number of switching means (42A, 42B, 42C, 42D) provided between said potential changing means and a number of said data lines; and
ON/OFF control means (44) for controlling turning on/off of each one of a number of said switching means.

7. A driving method for driving a liquid crystal display (10) in which a number of data lines (d1..dn) and a number of gate lines (G1..Gm) are arranged to intersect with each other, and respective display cells (18) are positioned at the intersections of the data and gate lines, said data lines consist of a plurality of data line groups (A, B, C, D), each display cell consisting of a switching element (24) connected to a data line and a gate line, a pair of electrodes oppositely positioned with a predetermined spacing and forming a pixel capacitor, and liquid crystal disposed between said pair of electrodes (22, 20), said driving method comprising steps of:
applying a voltage to said gate lines to turn on for a predetermined duration said switching element of said display cell connected to said gate line; and
applying a data voltage to said data line within said predetermined duration to change a voltage between the electrode pair of said display cell connected to said gate line to which the voltage is applied by said gate line driving means to a predetermined voltage;
**characterised in that** the method further comprises the steps of:
controlling the potential on said data line so that, before the step of applying a data voltage, the potential on said data line is controlled such that the charge time for the data line and the pixel capacitor is reduced and that the potential on data lines in only one data line group at a time is controlled.

8. A driving method for driving a liquid crystal display (10) as claimed in Claim 7, wherein said control step controls the potential on said data line (d1..dn) so that the potential on said data line becomes the average value of said data voltage or the minimum absolute value of the data voltage.

9. A driving method for driving a liquid crystal display (10) as claimed in Claim 7 or Claim 8, wherein said data voltage application step applies to a first subset of the data lines a voltage with a polarity different from the polarity applied to other than the first subset of the data lines; and
said controlling step controls the potential on said data line by electrically connecting each of the first subset of the data lines to data lines other than the first subset of the data lines.

10. A driving method for driving a liquid crystal display (10) as claimed in any one of Claims 7 to Claim 9, wherein said control step is performed during the time after the application of data voltage to the data line (d1..dn) a previous time until before it applies the data voltage next time.

11. A driving method for driving a liquid crystal display (10) as claimed in Claim 10, wherein said control step is performed while a voltage is being applied to the gate line (G1..Gm) of a display cell (18) in which the voltage between the electrode pair is to be changed by the data voltage to be applied to said data line.

## Patentansprüche

1. Steuervorrichtung zum Ansteuern einer Flüssigkristallanzeige (10), an welche die Steuervorrichtung angeschlossen werden kann, wobei in der Flüssigkristallanzeige eine Anzahl Datenleitungen (d1..dn) und eine Anzahl Steuerleitungen (G1..Gm) so angeordnet sind, dass sie sich gegenseitig kreuzen, und an den Kreuzungspunkten der Daten- und der Steuerleitungen entsprechende Anzeigezellen (18) angeordnet sind und wobei die Datenleitungen aus einer Vielzahl von Datenleitungsgruppen (A, B, C, D) bestehen, jede Anzeigezelle ein mit einer Datenleitung und einer Steuerleitung verbundenes Schaltelement (24), ein einen Pixelkondensator bildendes in einem vorgegebenen Abstand gegenüber liegendes Elektrodenpaar (22, 20) und einen zwischen dem Elektrodenpaar angeordneten Flüssigkristall (18) umfasst, wobei die Steuervorrichtung Folgendes umfasst:
ein Steuerleitungssteuermittel (34), das zum Anlegen einer Spannung an die Steuerleitungen mit einer Anzahl der Steuerleitungen verbunden werden kann, um das Schaltelement der mit der Steuerleitung verbundenen Anzeigezelle für eine vorgegebene Zeitdauer einzuschalten; und
ein Datenleitungssteuermittel (40), das zum Anlegen einer Datenspannung an die Datenleitungen in jeder Datenleitungsgruppe für eine vorgegebene Zeitdauer mit einer Anzahl der Datenleitungen verbunden werden kann, um die Spannung zwischen dem Elektrodenpaar der mit derjenigen Steuerleitung verbundenen Anzeigezelle zu ändern, an welche durch das Steuerleitungssteuermittel die Spannung auf einen vorgegebenen Spannungswert angelegt wird;
**dadurch gekennzeichnet, dass** die Steuervorrichtung ferner Folgendes umfasst:
Potenzialsteuermittel (42A, 42B, 42C, 42D, 44, 46, 36) zur Steuerung des Potenzials einer Anzahl von Datenleitungen in der Weise, dass das Potenzial der Datenleitung in jeder Datenleitungsgruppe vor dem Anlegen der Datenspannung durch das Datenleitungssteuermittel an die Datenleitung in jeder Datenleitungsgruppe so gesteuert wird, dass die Ladedauer für die Datenleitung und den Pixelkondensator verkürzt und das Potenzial an den Datenleitungen jeweils nur an einer Datenleitungsgruppe gesteuert wird.

2. Steuervorrichtung zum Ansteuern einer Flüssigkristallanzeige (10) nach Anspruch 1, wobei das Potenzialsteuermittel ein Mittel zur Steuerung des Potenzials an den Datenleitungen (d1..dn) enthält, sodass das Potenzial an den Datenleitungen den Mittelwert der durch das Datenleitungssteuermittel (40) angelegten Datenspannung oder den minimalen Absolutwert der Datenspannung annimmt.

3. Steuervorrichtung zum Ansteuern einer Flüssigkristallanzeige (10) nach Anspruch 1 oder Anspruch 2, wobei das Datenleitungssteuermittel (40) ein Mittel zum Anlegen einer Spannung an eine erste Teilgruppe der Datenleitungen (d1..dn) enthält, deren Polarität sich von der Polarität der an die Datenleitungen außer der ersten Teilgruppe von Datenleitungen angelegten Spannung unterscheidet, und wobei das Potenzialsteuermittel ein Mittel zur Steuerung des Potenzials an den Datenleitungen durch elektrisches Verbinden jeder Datenleitung der ersten Teilgruppe mit Datenleitungen außer der ersten Teilgruppe von Datenleitungen enthält.

4. Steuervorrichtung zum Ansteuern einer Flüssigkristallanzeige (10) nach einem der Ansprüche 1 bis 3, wobei das Potenzialsteuermittel jede aus einer Anzahl von Datenleitungen (d1..dn) während des Zeitraums vom Anlegen der Datenspannung an die Datenleitung durch das Datenleitungssteuermittel (40) zu einem früheren Zeitpunkt bis zum nächsten Anlegen der Datenspannung steuert.

5. Steuervorrichtung zum Ansteuern einer Flüssigkristallanzeige (10) nach Anspruch 4, wobei das Potenzialsteuermittel das Potenzial an den Datenleitungen (d1..dn) während des Zeitraums steuert, während dessen eine Spannung an der Steuerleitung anliegt, die mit einer Anzeigezelle (18) verbunden ist, deren Spannung zwischen dem Elektrodenpaar durch die an die Datenleitung anzulegende Datenspannung geändert werden soll.

6. Steuervorrichtung zum Ansteuern einer Flüssigkristallanzeige (10) nach einem der Ansprüche 1 bis 5, wobei das Potenzialsteuermittel Folgendes umfasst:
ein Potenzialänderungsmittel (46) zum Ändern des Potenzials an den Datenleitungen;
eine Anzahl zwischen dem Potenzialänderungsmittel und einer Anzahl von Datenleitungen angeordnetes Schaltmittel (42A, 42B, 42C, 42D); und
ein EIN/AUS-Schaltmittel (44) zum Steuern des Ein-/Ausschaltens jedes aus der Anzahl von Schaltmitteln.

7. Steuerverfahren zum Ansteuern einer Flüssigkristallanzeige (10), bei der eine Anzahl von Datenleitungen (d1..dn) und eine Anzahl von Steuerleitungen (G1..Gm) so angeordnet sind, dass sie sich gegenseitig kreuzen, und an den Kreuzungspunkten der Daten- und der Steuerleitungen entsprechende Anzeigezellen (18) angeordnet sind und wobei die Datenleitungen aus einer Vielzahl von Datenleitungsgruppen (A, B, C, D) bestehen, jede Anzeigezelle aus einem mit einer Datenleitung und einer Steuerleitung verbundenes Schaltelement (24), einem einen Pixelkondensator bildenden in einem vorgegebenen Abstand gegenüberliegenden Elektrodenpaar und einem zwischen dem Elektrodenpaar (22, 20) angeordneten Flüssigkristall besteht, wobei das Verfahren die folgenden Schritte umfasst:
Anlegen einer Spannung an die Steuerleitungen, um das Schaltelement der mit der Steuerleitung verbundenen Anzeigezelle für eine vorgegebene Zeitdauer einzuschalten; und
Anlegen einer Datenspannung an die Datenleitung während der vorgegebenen Zeitdauer zum Ändern einer Spannung zwischen dem Elektrodenpaar der Anzeigezelle, welche mit der Steuerleitung verbunden ist, an welche die Spannung durch das Steuerleitungssteuermittel auf einen vorgegebenen Spannungswert angelegt wird;
**dadurch gekennzeichnet, dass** das Verfahren ferner die folgenden Schritte umfasst:
Steuern des Potenzial an der Datenleitung in der Weise, dass das Potenzial an der Datenleitung vor dem Schritt des Anlegens einer Datenspannung so gesteuert wird, dass die Ladedauer für die Datenleitung und den Pixelkondensator verkürzt und das Potenzial an den Datenleitungen jeweils nur an einer Datenleitungsgruppe gesteuert wird.

8. Steuerverfahren zum Ansteuern einer Flüssigkristallanzeige (10) nach Anspruch 7, wobei der Steuerschritt das Potenzial an den Datenleitungen (d1..dn) in der Weise steuert, dass das Potenzial an den Datenleitungen den Mittelwert der Datenspannung oder den minimalen Absolutwert der Datenspannung annimmt.

9. Steuerverfahren zum Ansteuern einer Flüssigkristallanzeige (10) nach Anspruch 7 oder Anspruch 8, wobei der Schritt des Anlegens der Datenspannung an die erste Teilgruppe der Datenleitungen eine Spannung mit einer Polarität anlegt, die sich von der Polarität der an die Datenleitungen außer der ersten Teilgruppe von Datenleitungen angelegten Spannung unterscheidet; und
wobei der Steuerschritt das Potenzial an der Datenleitung durch elektrisches Verbinden jeder Datenleitung der ersten Teilgruppe der Datenleitungen mit Datenleitungen außer der ersten Teilgruppe der Datenleitungen steuert.

10. Steuerverfahren zum Ansteuern einer Flüssigkristallanzeige (10) nach einem der Ansprüche 7 bis Anspruch 9, wobei der Steuerschritt während des Zeitraums nach dem Anlegen der Datenspannung an die Datenleitung (d1..dn) zu einem früheren Zeitpunkt bis zum nächsten Anlegen der Datenspannung ausgeführt wird.

11. Steuerverfahren zum Ansteuern einer Flüssigkristallanzeige (10) nach Anspruch 10, wobei der Steuerschritt ausgeführt wird, während eine Spannung an der Steuerleitung (G1..Gm) einer Anzeigezelle (18) anliegt, deren Spannung zwischen dem Elektrodenpaar durch die an die Datenleitung angelegte Datenspannung geändert werden soll.

## Revendications

1. Dispositif d'attaque destiné à attaquer un afficheur à cristaux liquides (10) auquel le dispositif d'attaque peut être connecté, dans lequel un certain nombre de lignes de données (d1 ... dn) et un certain nombre de lignes de grilles (G1 ... Gm) sont agencées pour se croiser les unes avec les autres, et des cellules d'affichage respectives (18) sont positionnées aux intersections des lignes de données et de grilles, lesdites lignes de données consistant en une pluralité de groupes de lignes de données (A, B, C, D), chaque cellule d'affichage comprenant un élément de commutation (24) relié à une ligne de données et une ligne de grilles, une paire d'électrodes 22, 20) formant un condensateur de pixel, positionnées de façon opposée avec un espacement prédéterminé, et des cristaux liquides (18) disposés entre ladite paire d'électrodes, ledit dispositif d'attaque comprenant :
un moyen d'attaque de ligne de grilles (34) pouvant être connecté à un certain nombre desdites lignes de grilles en vue d'appliquer une tension auxdites lignes de grilles pour rendre conducteur pendant une durée prédéterminée ledit élément de commutation de ladite cellule d'affichage reliée à ladite ligne de grilles, et
un moyen d'attaque de ligne de données (40) pouvant être connecté à un certain nombre desdites lignes de données en vue d'appliquer une tension de données auxdites lignes de données dans chacun desdits groupes de lignes de données pendant ladite durée prédéterminée afin de modifier la tension entre la paire d'électrodes de ladite cellule d'affichage reliée à ladite ligne de grilles à laquelle la tension est appliquée par ledit moyen d'attaque de ligne de grilles en une tension prédéterminée,
**caractérisé en ce que** le dispositif d'attaque comprend en outre :
un moyen de commande de potentiel (42A, 42B, 42C, 42D, 44, 46, 36) destiné à commander le potentiel sur un certain nombre desdites lignes de données de sorte que, avant que la tension de données soit appliquée à ladite ligne de données dans chacun desdits groupes de lignes de données par ledit moyen d'attaque de ligne de données, le potentiel sur ladite ligne de données dans chacun desdits groupes de lignes de données est commandé de sorte que le temps de charge pour la ligne de données et le condensateur de pixel soit réduit, et **en ce que** le potentiel sur des lignes de données dans un seul groupe de lignes de données à la fois est commandé.

2. Dispositif d'attaque destiné à attaquer un afficheur à cristaux liquides (10) selon la revendication 1, dans lequel ledit moyen de commande de potentiel comprend un moyen destiné à commander le potentiel sur lesdites lignes de données (d1 ... dn) de sorte que le potentiel sur ladite ligne de données devienne la valeur moyenne de la tension de données appliquée par ledit moyen d'attaque de ligne de données (40) ou la valeur absolue minimum de ladite tension de données.

3. Dispositif d'attaque destiné à attaquer un afficheur à cristaux liquides (10) selon la revendication 1 ou la revendication 2, dans lequel ledit moyen d'attaque de ligne de données (40) comprend un moyen destiné à appliquer à un premier sous -ensemble des lignes de données (d1 ... dn) une tension ayant une polarité différente de la polarité appliquée à un autre que le premier sous -ensemble de lignes de données, et ledit moyen de commande de potentiel comprend un moyen destiné à commander le potentiel sur lesdites lignes de données en reliant électriquement chaque ligne du premier sous -ensemble de lignes de données à des lignes de données autres que celle du premier sous -ensemble de lignes de données.

4. Dispositif d'attaque destiné à attaquer un afficheur à cristaux liquides (10) selon l'une quelconque des revendications 1 à 3, dans lequel ledit moyen de commande de potentiel commande chacune d'un certain nombre de lignes desdites lignes de données (d1 ... dn) durant le temps après que ledit moyen d'attaque de ligne de données (40) applique la tension de données à ladite ligne de données à un instant précédent jusqu'à ce qu'il applique la tension de données la fois suivante.

5. Dispositif d'attaque destiné à attaquer un afficheur à cristaux liquides (10) selon la revendication 4, dans lequel ledit moyen de commande de potentiel commande le potentiel sur ladite ligne de données (d1 ... dn) durant le temps où une tension est appliquée sur la ligne de grilles reliée à une cellule d'affichage (18) dans laquelle la tension entre la paire d'électrodes doit être modifiée par la tension de données à appliquer à la ligne de données.

6. Dispositif d'attaque destiné à attaquer un afficheur à cristaux liquides (10) selon l'une quelconque des revendications 1 à 5, dans lequel ledit moyen de commande de potentiel comprend :
un moyen de modification de potentiel (46) destiné à modifier le potentiel sur ladite ligne de données,
un certain nombre de moyens de commutation (42A, 42B, 42C, 42D) prévus entre ledit moyen de modification de potentiel et un certain nombre desdites lignes de données, et
un moyen de commande conducteur/bloqué (44) destiné à commander le passage état conducteur/état bloqué de chacun d'un certain nombre de moyens de commutation.

7. Procédé d'attaque destiné à attaquer un afficheur à cristaux liquides (10) dans lequel un certain nombre de lignes de données (d1 ... dn) et un certain nombre de lignes de grilles (G1 ... Gn) sont agencés pour se croiser les uns avec les autres, et des cellules d'affichage respectives (18) sont positionnées aux intersections des lignes de données et de grilles, lesdites lignes de données sont constituées d'une pluralité de groupes de lignes de données (A, B, C, D), chaque cellule d'affichage étant constituée d'un élément de commutation (24) relié à une ligne de données et à une ligne de grilles, d'une paire d'électrodes positionnée de façon opposée avec un espacement prédéterminé et formant un condensateur de pixel, et de cristaux liquides disposés entre ladite paire d'électrodes (22, 20), ledit procédé d'attaque comprenant les étapes consistant à :
appliquer une tension auxdites lignes de grilles pour rendre conducteur pendant une durée prédéterminée ledit élément de commutation de ladite cellule d'affichage reliée à ladite ligne de grilles, et
appliquer une tension de données à ladite ligne de données en moins de ladite durée prédéterminée pour modifier une tension entre la paire d'électrodes de ladite cellule d'affichage reliée à ladite ligne de grilles à laquelle la tension est appliquée par ledit moyen d'attaque de ligne de grilles en une tension prédéterminée,
**caractérisé en ce que** le procédé comprend en outre les étapes consistant à :
commander le potentiel sur ladite ligne de données de sorte que, avant l'étape consistant à appliquer une tension de données, le potentiel sur ladite ligne de données soit commandé de telle sorte que la durée de charge pour la ligne de données et le condensateur de pixel soit réduite, et **en ce que** le potentiel sur les lignes de données dans un seul groupe de lignes de données à la fois soit commandé.

8. Procédé d'attaque destiné à attaquer un afficheur à cristaux liquides (10) selon la revendication 7, dans lequel ladite étape consistant à commander commande le potentiel sur ladite ligne de données (d1 ... dn) de sorte que le potentiel sur ladite ligne de données devienne la valeur moyenne de ladite tension de données ou la valeur absolue minimum de la tension de données.

9. Procédé d'attaque destiné à attaquer un afficheur à cristaux liquides (10) selon la revendication 7 ou la revendication 8, dans lequel ladite étape d'application de tension de données applique à un premier sous -ensemble de lignes des lignes de données une tension ayant une polarité différente de la polarité appliquée à un autre que le premier sous -ensemble de lignes de données, et
ladite étape consistant à commander commande le potentiel sur ladite ligne de données en reliant électriquement chaque ligne du premier ensemble des lignes de données à des lignes de données autres que celles du premier sous -ensemble des lignes de données.

10. Procédé d'attaque destiné à attaquer un afficheur à cristaux liquides (10) selon l'une quelconque des revendications 7 à 9, dans lequel ladite étape de commande est exécutée durant le temps après l'application de la tension de données sur la ligne de données (d1 ... dn), une fois précédente jusqu'à ce qu'il applique la tension de données la fois suivante.

11. Procédé d'attaque destiné à attaquer un afficheur à cristaux liquides (10) selon la revendication 10, dans lequel ladite étape de commande est exécutée alors qu'une tension est appliquée sur la ligne de grilles (G1 ... Gm) d'une cellule d'affichage (18) dans laquelle la tension entre la paire d'électrodes doit être modifiée par la tension de données pour être appliquée à ladite ligne de données.
